# EUROPÄISCHE PATENTSCHRIFT

(11) **EP 0 577 853 B1**
(45) Veröffentlichungstag und Bekanntmachung des Hinweises auf die Patenterteilung: **10.05.1995**
(21) Anmeldenummer: 92107824.2
(22) Anmeldetag: 08.05.1992
(51) Int. Cl.: B01D 53/94, F01N 3/20

(54) **Einrichtung zur Entstickung von Abgas eines Verbrennungsmotors**
Denitration device for exhaust gases of internal combustion motors
Dispositif pour la dénitration des gaz d'échappement des moteurs à combustion interne

(43) Veröffentlichungstag der Anmeldung: 12.01.1994
(73) Patentinhaber: SIEMENS AKTIENGESELLSCHAFT, 80333 München (DE)
(72) Erfinder: Ramstetter, Asbjörn, Dr., W-8000 München 83 (DE); Schmelz, Helmut, Dr., W-8210 Prien (DE); Neufert, Ronald, Dr., W-8620 Lichtenfels (DE)

(56) Entgegenhaltungen:
- DE-A- 3 830 045
- PATENT ABSTRACTS OF JAPAN vol. 15, no. 329 (M-1149)(4857) 21. August 1991&JP-A-31 24 909 (MITSUBISHI MOTORS CORP.) 28. Mai 1991

## Beschreibung

Die Erfindung bezieht sich auf eine Einrichtung zur Entstickung von Abgas eines Verbrennungsmotors, insbesondere eines Dieselmotors, mit einer Abgasleitung, einem an der Abgasleitung angeschlossenen DeNOₓ-Katalysator, einem Vorratsbehälter für ein zumindest teilweise in Ammoniak umwandelbares Reduktionsmittel, einem dem DeNOₓ-Katalysator vorgeschalteten Ammoniakgenerator und einer Einrichtung zur Einbringung des Reduktionsmittels in das dem DeNOₓ-Katalysator zuströmenden Abgas.

Zur Entstickung von Abgas eines Verbrennungsmotors, insbesondere eines Dieselmotors, sind Einrichtungen und Verfahren bekannt, die die Stickoxide analog zu dem in Kraftwerken bewährten Verfahren der selektiven katalytischen Reduktion (SCR) mit Ammoniak als Reduktionsmittel an sogenannten DeNOₓ- Katalysatoren zu Stickstoff reduzieren (DE-A-36 15 021, EP-A-0 277 765).

Ammoniak sollte jedoch aufgrund seiner Giftigkeit nicht im Fahrzeug mitgeführt werden, sondern sollte im Fahrzeug selbst aus einer ungiftigen Vorläufer-Substanz in kleinen, ausschließlich zum augenblicklichen Verbrauch im DeNOₓ-Katalysator bestimmte Mengen erzeugt werden. Die ungiftige Vorläufer-Substanz sollte hierbei unter Lagerbedingungen im Fahrzeug einen sehr geringen Dampfdruck entwickeln, so daß bei Unfällen oder bei Hitze (Stau) keine Gefahr einer Ammoniak-Geruchsbelästigung besteht. Eine geeignete Substanz ist Harnstoff, der in einem Vorratsbehälter in Form einer wäßrigen Lösung im Fahrzeug mitgeführt werden kann.

Aus der wäßrigen Harnstofflösung entsteht durch Hydrolyse der zur SCR-Reaktion benötigte Ammoniak. Die Hydrolyse kann durch direktes Einspritzen einer wäßrigen Harnstofflösung in das heiße Abgas (DE-A-38 30 045) oder durch die Kontaktierung der wäßrigen Harnstofflösung mit einem Hydrolysekatalysator erfolgen. Als weitere ungiftige Vorläufer-Substanzen, die als Ammoniakspeicher dienen können, eignen sich auch diverse Ammoniumverbindungen.

Bei hohen Temperaturen, zum Beispiel bei Abstellen des Fahrzeugs in der Sonne oder in heißen Regionen, kann es zur Überhitzung des zumindest teilweise in Ammoniak umwandelbaren Reduktionsmittels kommen. Aufgrund des mit steigender Temperatur zunehmenden Zersetzungsdampfdrucks für zum Beispiel eine wäßrige Harnstofflösung muß das gebildete Ammoniak zur Druckentlastung des Vorratsbehälters entweichen können, ohne daß es zu einer Geruchsbelästigung durch Ammoniak kommt.

Der Erfindung liegt daher die Aufgabe zugrunde, eine Einrichtung anzugeben, die für eine Druckentlastung im Vorratsbehälter sorgt, ohne daß es zu einer Geruchsbelästigung durch Ammoniak kommt.

Diese Aufgabe wird erfindungsgemäß dadurch gelöst, daß eine Druckentlastungsleitung an den Vorratsbehälter für ein zumindest teilweise in Ammoniak umwandelbares Reduktionsmittel angeschlossen ist, über die überschüssiges Reduktionsmittel dem DeNOₓ-Katalysator zuführbar ist. Auf diese Weise wird eine unzulässige Druckexkursion im Vorratsbehälter vermieden. Darüber hinaus wird die hohe Adsorptionskapazität üblicher DeNOₓ-Katalysatoren genutzt, um den überschüssigen Ammoniak zu binden und so zu vermeiden, daß das Ammoniak an die Umgebungsluft gelangt. Der im DeNOₓ-Katalysator aufgenommene Ammoniak wird - etwa nach der Wiederinbetriebnahme des Verbrennungsmotors - bei Erreichen der im Katalysator zur katalytischen Umsetzung notwendigen Temperatur mit den Stickoxiden katalytisch umgesetzt.

Es erweist sich als vorteilhaft, als zumindest teilweise in Ammoniak umwandelbares Reduktionsmittel eine wäßrige Harnstofflösung zu verwenden, die etwa 20 bis 60 %ig ist. Hierdurch kann einerseits mit dem Einspritzen kleiner Harnstoffmengen der zur katalytischen Umsetzung der Stickoxide benötigte Ammoniak bereitgestellt werden. Andererseits ist der Zersetzungsdampfdruck dieser wäßrigen Lösung niedrig genug, so daß nicht ständig überschüssiges Ammoniak dem DeNOₓ-Katalysator zugeführt werden muß.

In vorteilhafter Ausgestaltung der Erfindung enthält die Druckentlastungsleitung ein Überdruckventil. Hierdurch läßt sich die von dem DeNOₓ-Katalysator aufzunehmende Menge überschüssiges Ammoniak im Rahmen der Druckfestigkeit des Vorratsbehälters begrenzen.

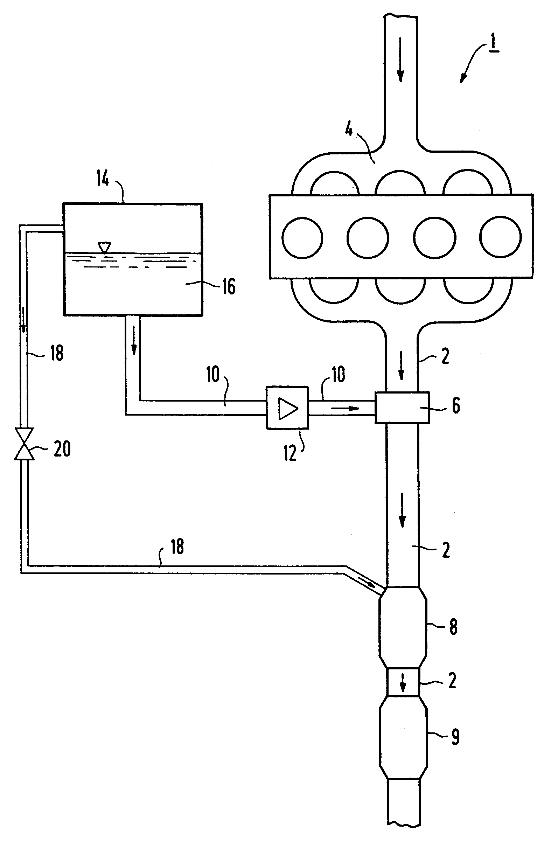

Ein Ausführungsbeispiel der Erfindung wird anhand der Zeichnung näher erläutert. Dabei zeigt:
Die Figur eine schematische Darstellung einer Einrichtung zur Entstickung von Abgas eines Verbrennungsmotors, hier eines Dieselmotors, mit einer erfindungsgemäßen Druckentlastungsleitung.

An der in der Figur schematisch dargestellten Abgasleitung 2 eines Dieselmotors 4 ist eine Einrichtung 1 zur Entstickung der Abgase angeschlossen. Diese umfaßt einen Ammoniakgenerator 6, einen DeNOₓ-Katalysator 8 und einen Oxidationskatalysator 9. An den Ammoniakgenerator 6 ist eine Reduktionsmittelzuführungsleitung 10 angeschlossen, die den Ammoniakgenerator 6 über eine Reduktionsmittelzuführung 12 mit einem Vorratsbehälter 14 verbindet. Im Vorratsbehälter 14 befindet sich eine wäßrige Harnstofflösung 16. Im oberen Teil des Vorratsbehälters 14 ist eine Druckentlastungsleitung 18 angeschlossen, die über ein Überdruckventil 20 in den Eingang des DeNOₓ-Katalysators 8 mündet.

Beim Betrieb des Dieselmotors 4 wird das zur katalytischen Umsetzung der Stickoxide im Abgas erforderliche Ammoniak mittels der Reduktionsmittelzuführung 12 - im vorliegenden Fall eine Einspritzvorrichtung - in Form der wäßrigen Harnstofflöstung 16 in den durch die Abgase auf Betriebstemperatur aufgeheizten (ca. 200 bis 600 °C) Ammoniakgenerator 6 eingedüst. Bei diesen Temperaturen zersetzt sich die Harnstofflösung an den heißen Oberflächen des Ammoniakgenerators 6 in Ammoniak und Wasser. Das im Ammoniakgenerator 6 gebildete Ammoniak wird anschließend mit den im Abgas befindlichen Stickoxiden in dem DeNOₓ-Katalysator 8 zu Stickstoff und Wasser katalytisch umgesetzt.

Kommt es zu einer Erwärmung der im Ausführungsbeispiel 20 bis 60 %igen wäßrigen Harnstofflösung 16 im Vorratsbehälter 14, steigt durch diese Erwärmung der Zersetzungsdampfdruck der Harnstofflösung, wodurch sich ein Überdruck im Vorratsbehälter 14 durch das sich bildende Ammoniak aufbaut. Erreicht dieser Überdruck im Ausführungsbeispiel einen Druck von 1000 hPa, öffnet sich das in die Druckentlastungsleitung 18 eingebaute Überdruckventil 20. Das überschüssige Ammoniak strömt dann aus dem Vorratsbehälter 14 über die Druckentlastungsleitung 18 in den Eingang des DeNOₓ-Katalysators 8, bis der Druck am Überdruckventil 20 wieder unter 1000 hPa abgesunken ist. Das in den DeNOₓ-Katalysator 8 geleitete Ammoniak wird an dem katalytischen Material gebunden. Der im Ausführungsbeispiel verwendete 50 l DeNOₓ-Katalysator 8 eignet sich zur Aufnahme von ca. 100 g Ammoniak, entsprechend einem Volumen von etwa 130 Normlitern gasförmigen Ammoniaks. Die im DeNOₓ-Katalysator 8 aufgenommene Ammoniakmenge wird auf diese Weise nicht direkt an die Umgebungsluft abgegeben.

Das im DeNOₓ-Katalysator 8 aufgenommene Ammoniak wird anschließend mit den Stickoxiden des Abgases katalytisch zu Stickstoff und Wasser umgesetzt, wenn der DeNOₓ-Katalysator 8 die zur katalytischen Umsetzung hinreichend hohe Temperatur oberhalb 250 °C erreicht. Erst wenn der im DeNOₓ-Katalysator 8 aufgenommene Ammoniak wieder durch die katalytische Reaktion vollständig verbraucht ist, wird wieder gezielt Ammoniak in Form der flüssigen Harnstofflösung 16 in den Ammoniakgenerator 6 der Abgasleitung 2 zudosiert.

Zum Schutz vor direkter Sonnenbestrahlung ist der Vorratsbehälter 14 für die wäßrige Harnstofflösung 16 im Inneren eines Kraftfahrzeuges eingebaut und kann beispielsweise mit dem Kraftstoffbehälter kombiniert werden. Es ist außerdem sinnvoll, die gesamte Einrichtung zur Entstickung von Abgas des Verbrennungsmotors, hier des Dieselmotors 4, bestehend aus dem Vorratsbehälter 14, der Reduktionsmittelzuführungsleitung 10, der Reduktionsmittelzuführung 12, dem Ammoniakgenerator 6, der Druckentlastungsleitung 18, dem Überdruckventil 20 und dem DeNOₓ-Katalysator 8, in einer räumlichen Einheit zwischen einem Krümmer und einem Schalldämpfer im Kraftfahrzeug zu installieren.

## Patentansprüche

1. Einrichtung zur Entstickung der Abgase eines Verbrennungsmotors, insbesondere eines Dieselmotors, mit einer Abgasleitung (2), einem an der Abgasleitung angeschlossenen DeNOₓ₋ Katalysator (6), einem Vorratsbehälter (14) für ein zumindest teilweise in Ammoniak umwandelbares Reduktionsmittel (16), einem dem DeNOₓ-Katalysator (8) vorgeschalteten Ammoniakgenerator (6) und einer Einrichtung (12) zur Einbringung des Reduktionsmittels in das dem DeNOₓ-Katalysator (8) zuströmende Abgas, **dadurch gekennzeichnet**, daß an den Vorratsbehälter (14) eine Druckentlastungsleitung (18) angeschlossen ist, über die überschüssiges Reduktionsmittel dem DeNOₓ-Katalysator (8) zuführbar ist.

2. Einrichtung nach Anspruch 1, **dadurch gekennzeichnet**, daß das zumindest teilweise in Ammoniak umwandelbare Reduktionsmittel eine wäßrige Harnstofflösung (16) ist.

3. Einrichtung nach Anspruch 2, **gekennzeichnet durch** eine 20 bis 60 %ige wäßrige Harnstofflösung (16).

4. Einrichtung nach Anspruch 1, **dadurch gekennzeichnet**, daß das in Ammoniak umwandelbare Reduktionsmittel Ammoniakwasser ist.

5. Einrichtung nach einem der Ansprüche 1 bis 4, **dadurch gekennzeichnet**, daß die Druckentlastungsleitung (18) ein Überdruckventil (20) enthält.

6. Einrichtung nach einem der Ansprüche 1 bis 5, **dadurch gekennzeichnet**, daß die Druckentlastungsleitung (18) an den Eingang des DeNOₓ-Katalysators (8) angeschlossen ist.

7. Einrichtung nach einem der Ansprüche 1 bis 6, **dadurch gekennzeichnet**, daß dem DeNOₓ-Katalysator (8) ein Oxidationskatalysator (9) für überschüssiges Ammoniak nachgeschaltet ist.

## Claims

1. A device for the removal of nitrogen from the exhaust gases of a combustion engine, particularly a diesel engine, with an exhaust pipe (2), a DeNOₓ catalyst (8) attached to the exhaust pipe, a storage vessel (14) for a reducing agent (16) that can be converted at least partially to ammonia, an ammonia generator (6) upstream of the DeNOₓ catalyst (8), and a device (12) for introducing the reducing agent into the exhaust gas flowing into the DeNOₓ catalyst (8), characterised in that attached to the storage vessel (14) is a pressure relief line (18) through which excess reducing agent can be fed to the DeNOₓ catalyst (8).

2. A device according to claim 1, characterised in that the reducing agent that can be converted at least partially to ammonia is an aqueous urea solution (16).

3. A device according to claim 2, characterised by a 20 to 60% aqueous urea solution (16).

4. A device according to claim 1, characterised in that the reducing agent that can be converted to ammonia is aqueous ammonia.

5. A device according to one of claims 1 to 4, characterised in that the pressure relief line (18) contains a pressure relief valve (20).

6. A device according to one of claims 1 to 5, characterised in that the pressure relief line (18) is attached to the inlet of the DeNOₓ catalyst (8).

7. A device according to one of claims 1 to 6, characterised in that an oxidation catalyst (9) for excess ammonia is provided downstream of the DeNOₓ catalyst (8).

## Revendications

1. Dispositif de dénitration des gaz d'échappement d'un moteur à combustion interne, notamment d'un moteur diesel, comportant un tuyau d'échappement (2), un catalyseur DeNOₓ (6), qui est raccordé au tuyau d'échappement, un réservoir (14) de stockage d'un agent réducteur (16) pouvant être transformé au moins partiellement en ammoniac, un générateur d'ammoniac (6) branché en amont du catalyseur DeNOₓ (8), et un dispositif (12) pour introduire l'agent réducteur dans les gaz d'échappement qui sont envoyés au catalyseur DeNOₓ (8), caractérisé par le fait qu'au réservoir (14) de stockage est raccordée une canalisation de détente de pression (18), par laquelle l'agent réducteur en excès peut être envoyé au catalyseur DeNOₓ (8).

2. Dispositif suivant la revendication 1, caractérisé par le fait que l'agent réducteur, qui peut se transformer au moins partiellement en ammoniac, est une solution aqueuse d'urée (16).

3. Dispositif suivant la revendication 2, caractérisé par une solution aqueuse d'urée à 20 à 60 % (16).

4. Dispositif suivant la revendication 1, caractérisé par le fait que l'agent réducteur pouvant se transformer en ammoniac est de l'eau ammoniacale.

5. Dispositif suivant l'une des revendications 1 à 4, caractérisé par le fait que la canalisation de détente de pression (18) comporte une soupape de surpression (20).

6. Dispositif suivant l'une des revendications 1 à 5, caractérisé par le fait que la canalisation de détente de pression (18) est raccordée à l'entrée du catalyseur DeNOₓ (8).

7. Dispositif suivant l'une des revendications 1 à 6, caractérisé par le fait qu'un catalyseur d'oxydation (9) pour l'ammoniac en excès est disposé en aval du catalyseur DeNOₓ (8).
